# EUROPEAN PATENT SPECIFICATION

(11) **EP 3 955 453 B1**
(45) Date of publication and mention of the grant of the patent: **11.12.2024**
(21) Application number: 21181404.1
(22) Date of filing: 24.06.2021
(51) Int. Cl.: H02M 7/5387, H02M 1/14, H02M 1/34, H02M 1/44, H02M 5/44, H02M 7/04

(54) **POWER CONVERSION DEVICE**
STROMUMWANDLUNGSVORRICHTUNG
DISPOSITIF DE CONVERSION D'ALIMENTATION ÉLECTRIQUE

(30) Priority: 11.08.2020 JP 2020135692
(43) Date of publication of application: 16.02.2022
(73) Proprietor: Fuji Electric Co., Ltd., Kawasaki-shi, Kanagawa 210-9530 (JP)
(72) Inventor: ASANO, Tamiko, Kanagawa, 210-9530 (JP)
(74) Representative: Appelt, Christian W.

(56) References cited:
- EP-A1- 1 427 098
- EP-A1- 3 422 552
- WO-A1-2016/163201
- WO-A1-2017/051639
- CN-U- 204 119 051
- CN-U- 205 566 108
- JP-A- 2005 130 575
- JP-A- 2013 157 087
- JP-A- 2019 208 315
- US-A- 5 426 344
- US-A1- 2014 321 171
- KANELIS KONSTANTIN ET AL: "New Low Cost IGBT-Modules", PCIM EUROPE, 1 June 2001 (2001-06-01), XP093088140
- LEO LORENZ ET AL: "Design Proposal for Low Power Drives", PCIM 2001, 20 June 2001 (2001-06-20), Nuremberg, XP055370947, Retrieved from the Internet <URL:https://pcim.mesago.com/nuernberg/en/conference/proceedings.html> [retrieved on 20170509]
- NIKOLOV GEORGI ET AL: "Investigation of an intelligent power supply system for an electric heater furnace with silicon carbide heaters", 2013 36TH INTERNATIONAL CONVENTION ON INFORMATION AND COMMUNICATION TECHNOLOGY, ELECTRONICS AND MICROELECTRONICS (MIPRO), MIPRO, 20 May 2013 (2013-05-20), pages 113 - 118, XP032482886

## Description

### FIELD

The present invention relates to a power conversion device.

### BACKGROUND

A technique for reducing radiation noise of a power conversion device based on a switching operation of a semiconductor element such as a MOSFET (Metal Oxide Semiconductor Field Effect Transistor) or an IGBT (Insulated Gate Bipolar Transistor) is known (for example, Japanese Patent No. 6041862).

In this regard, a noise component of high frequency (for example, 10 MHz or greater) generated from a semiconductor element such as an IGBT is converted from a normal mode (differential mode) to a common mode and propagated to an input side on a circuit of the power conversion device. And, the noise component flows out from the power conversion device to the input side and finally becomes a high frequency common mode current as a radiation noise source.

However, even if the noise component of the high frequency can be reduced (attenuated) in the propagation process of the conventional reducing method, the radiation noise may become relatively high depending on the circuit configuration or structure of the power conversion device. For example, a path with a relatively large amount of noise component of high frequency may be adjacent to the path on the input side where the amount of the noise component of the high frequency is relatively small, where the noise component of the high frequency is attenuated during the propagation process. In such a case, the noise component of the path with a relatively large amount of the noise component of high frequency is induced to the path with a relatively small amount of noise component of the high frequency on the input side. As a result, the amount of the radiation noise may be relatively large. Therefore, there is a possibility that radiation noise cannot be properly reduced with conventional reducing methods.

In the view of the above problem, the object of the present disclosure is to provide a technique capable of more appropriately reducing the radiation noise of the power conversion device.

WO 2016/163201 A1 describes a power conversion device. A bus bar connecting a plus terminal of a power module and an inrush prevention circuit, and a bus bar connecting a minus-side terminal of a smoothing capacitor and a minus terminal of the power module, are arranged opposing one another, and the direction of the current flowing in the bus bar and the direction of the current flowing in the bus bar are set so as to be reversed with respect to each other. In addition, a bus bar connecting the inrush prevention circuit and the plus-side terminal of the smoothing capacitor, and the bus bar are arranged opposing one another, and the direction of the current flowing in the bus bar and the direction of the current flowing in the bus bar are set so as to be reversed with respect to each other.

CN 204 119 051 U describes a low-voltage frequency converter. A main circuit of the frequency converter is an AC-DC-AC frequency converter structure and comprises a rectification circuit, an intermediate DC link circuit, an energy consumption brake circuit, and an inversion circuit. The rectification circuit is a three-phase bridge-type uncontrollable rectification circuit. The inversion circuit is an IGBT three-phase inverter circuit. The output is PWM waveforms. The intermediate DC link is filtering. The DC energy storage and buffering are of reactive power.

US 5 426 344 A describes a ballast circuit for fluorescent lamp which comprises an additional diode located just after the rectifier bridge and before smoothing capacitors. The diode is matched to the value of a mylar capacitor connected across the output of the rectifier bridge and the fluorescent lamp load.

US 2014/321171 A1 describes a power conversion device including a power conversion portion that switches direct current voltage supplied by a positive line and negative line of a direct current power supply with a semiconductor switching element, and outputs converted voltage. The power conversion device is such that a plurality of interline capacitors are connected in parallel between the positive line and negative line, the capacitance of the plurality of interline capacitors is of a value that becomes smaller the nearer to the power conversion portion the position in which the interline capacitor is connected, and the capacitance of the interline capacitor with the smallest value of capacitance is set to a value greater than that of the capacitance between main electrodes when a direct current voltage is applied to the switching element used in the power conversion portion.

CN 205 566 108 U describes a DC/DC charging device, including: N resonant modules, N rectifier modules, control module and diode; N resonant modules are connected in parallel to the DC bus, the output of the N resonant modules are connected to the N rectifier modules correspondingly; the control terminal of the N resonant modules is connected to the said control module respectively; the rectifier module output is connected to the load input via the said diode, the output of the N rectifier module is connected to the other input of the said load; the N rectifier modules are cascaded; N is a natural number not less than 1.

Kanelis, Konstantin ET AL: "New Low Cost IGBT-Modules", PCIM Europe, 1 June 2001 (2001-06-01), XP093088140, describes low cost and high power density IGBT modules with matched power semiconductor components and a corresponding assembly technology.

Leo Lorenz ET AL: "Design Proposal for Low Power Drives", PCIM 2001, 20 June 2001 (2001-06-20), XP055370947, describes semiconductor devices for motor drive systems, including IGBTs provided in different packages, as discrete devices and modules.

### SUMMARY

The above object is achieved by a system according to claim 1. Claims 2 to 9 refer to particularly advantageous realizations of the system according to claim 1.

In an embodiment of the present disclosure, a power conversion device including a rectifier circuit that is adapted to convert AC power input from outside into DC power, a smoothing capacitor provided in a path connecting a positive line and a negative line of DC power output from the rectifier circuit, a power conversion circuit, connected to the positive line and the negative line in parallel with the smoothing capacitor, wherein the power conversion circuit (30) is adapted to convert DC power smoothed by the smoothing capacitor into predetermined AC power by switching operation of semiconductor elements and to output the predetermined AC power, and a first across-the-line capacitor provided in a path connecting the positive line and the negative line between the rectifier circuit and the smoothing capacitor is provided.

According to the above-described embodiment, the radiation noise of the power conversion device can be reduced more appropriately.

### BRIEF DESCRIPTION OF THE DRAWINGS

Each of the following figures does not necessarily show each aspect of the present invention, which is defined by the independent claim. In particular, the sixth example, which is described below with reference to the third example, is encompassed by the wording of the independent claim, while the third example itself is not encompassed by the wording of the independent claim but is considered useful for understanding the invention. Furthermore, the eighth example, which is described below with reference to the fourth example, is encompassed by the wording of the independent claim, while the fourth example itself is not encompassed by the wording of the independent claim but is considered useful for understanding the invention. The first example, the second example, and the ninth example are not encompassed by the wording of the independent claim but are considered useful for understanding the invention. Each of the fifth and the seventh example is only encompassed by the wording of the independent claim if it also includes the second across-the-line capacitor.
FIG. 1 is a circuit diagram illustrating a first example of a power conversion device.
FIG. 2 is a circuit diagram illustrating a second example of a power conversion device.
FIG. 3 is a circuit diagram illustrating a third example of a power conversion device.
FIG. 4 is a circuit diagram illustrating a fourth example of a power conversion device.
FIG. 5 is a circuit diagram illustrating a fifth example of a power conversion device.
FIG. 6 is a circuit diagram illustrating a sixth example of a power conversion device.
FIG. 7 is a circuit diagram illustrating a seventh example of a power conversion device.
FIG. 8 is a circuit diagram illustrating an eighth example of a power conversion device.
FIG. 9 is a circuit diagram illustrating a ninth example of a power conversion device.
FIG. 10 is a diagram illustrating spectra of radiation noise of a power conversion device according to the comparative example and the power conversion device according to the embodiment.

### DESCRIPTION OF EMBODIMENTS

Hereinafter, embodiments will be described with reference to the drawings.

### [First Example of Power Conversion Device]

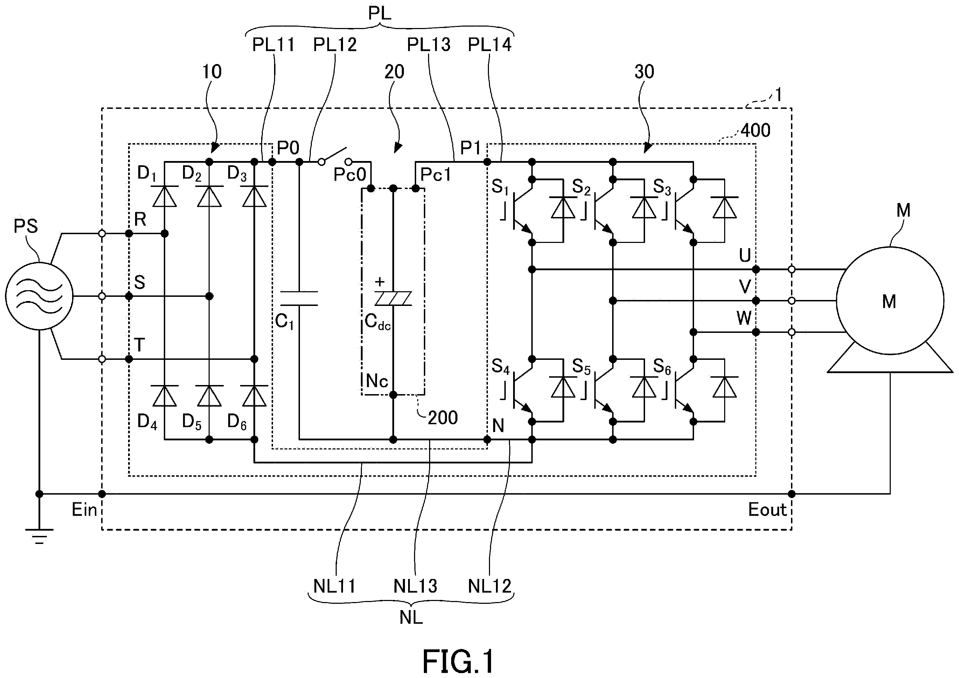

First, a first example of the power conversion device 1 according to the present embodiment will be described with reference to FIG. 1.

FIG. 1 is a circuit diagram illustrating a first example of the power conversion device according to the present embodiment.

The power conversion device 1 generates a predetermined three-phase AC power by using three-phase AC power of R-phase, S-phase, and T-phase input from a commercial AC power supply PS, and supplies the predetermined three-phase AC power to a motor M.

The power conversion device 1 includes terminals Ein and Eout conducting internally, and the motor M is grounded together with the commercial AC power supply PS by connecting the terminal Ein to the ground wire of the commercial AC power supply PS and connecting the terminal Eout to the reference potential of the motor M.

As shown in FIG. 1, the power conversion device 1 includes a rectifier circuit 10, a smoothing circuit 20, an inverter circuit 30, and a noise reducing capacitor C₁.

The rectifier circuit 10 rectifies three-phase AC power of R-phase, S-phase and T-phase input from the commercial AC power supply PS, and outputs predetermined DC power to the smoothing circuit 20 through a positive line PL and a negative line NL.

In the rectifier circuit 10, for example, six diodes D₁ to D₆ are connected by bridge. Specifically, a combination of upper and lower arms of diodes D₁ and D₄, diodes D₂ and D₅, and diodes D₃ and D₆ are connected in parallel. The rectifier circuit 10 is a bridge-type full-wave rectifier circuit in which three-phase AC power of R-phase, S-phase, and T-phase is input from an intermediate point of each upper and lower arm.

The smoothing circuit 20 reduces and smoothes a pulsation of a DC power output from the rectifier circuit 10 and a DC power regenerated from the inverter circuit 30.

The smoothing circuit 20 includes a smoothing capacitor C_{dc}.

The smoothing capacitor C_{dc} is arranged, in parallel with the rectifier circuit 10 and the inverter circuit 30, in a path connecting the positive line PL and the negative line NL. The smoothing capacitor C_{dc} smoothes the DC power output from the rectifier circuit 10 and the inverter circuit 30 while appropriately repeating charging and discharging.

The smoothing capacitor C_{dc} may be one in number. Furthermore, a plurality of smoothing capacitors C_{dc} may be arranged, and a plurality of smoothing capacitors C_{dc} may be connected in parallel between the positive line PL and the negative line NL, or may be connected in series. Hereinafter, the same may apply to the cases of the second to ninth embodiments described later.

The smoothing circuit 20 may include a DC reactor. In this case, for example, the DC reactor may be arranged in series on the positive line PL between the rectifier circuit 10 and the smoothing capacitor C_{dc}. Hereinafter, the same may apply to the cases of the second to ninth embodiments described later. The DC reactor is connected for improving the input power factor, reducing harmonic waves, stabilizing the smoothing circuit voltage, and the like.

The inverter circuit 30 (an example of a power conversion circuit) is connected to the positive line PL and the negative line NL in parallel with the smoothing circuit 20 (smoothing capacitor C_{dc}). The inverter circuit 30 converts the DC power supplied from the smoothing circuit 20 through the positive line PL and the negative line NL into three-phase AC power of U-phase, V-phase and W-phase having a predetermined frequency or a predetermined voltage, by switching operation of semiconductor elements S₁ to S₆, and outputs it to the motor M. The semiconductor elements S₁ to S₆ are, for example, IGBTs or MOSFETs.

The inverter circuit 30 is configured to include a bridge circuit in which a combination (switch leg) of upper and lower arms of semiconductor elements S₁ and S₄, semiconductor elements S₂ and S₅, and semiconductor elements S₃ and S₆ are connected in parallel between the positive line PL and the negative line NL. In the inverter circuit 30, output lines of U-phase, V-phase, and W-phase are pulled out from the connection points (intermediate points) of the upper and lower arms of semiconductor elements S₁ and S₄, semiconductor elements S₂ and S₅, and semiconductor elements S₃ and S₆. Furthermore, flyback diodes are connected in parallel to semiconductor elements S₁ to S₆ respectively.

The noise reducing capacitor C₁ (an example of a first across-the-line capacitor) is arranged in the path connecting the positive line PL and the negative line NL between the rectifier circuit 10 and the smoothing circuit 20 (the smoothing capacitor C_{dc}). For example, the noise reducing capacitor C₁ may be a laminated ceramic capacitor with a relatively small capacitance. Furthermore, the noise reducing capacitor C₁ may be one in number. Furthermore, a plurality of noise reducing capacitors C₁ may be arranged, and a plurality of noise reducing capacitors C₁ may be connected in parallel between the positive line PL and the negative line NL, or may be connected in series. Hereinafter, the same may apply to the cases of the second to ninth embodiments described later.

Furthermore, the power conversion device 1 may include a snubber capacitor (hereinafter, "a diode snubber capacitor") to protect diodes D₁ to D₆ and a snubber capacitor (hereinafter, "a switch snubber capacitor") to protect semiconductor elements S₁ to S₆. Hereinafter, the same may apply to the cases of the second to ninth embodiments described later.

The diode snubber capacitor is arranged in the path connecting the positive line PL and the negative line NL between the rectifier circuit 10 and the smoothing circuit 20 (the smoothing capacitor C_{dc}). For example, the diode snubber capacitor may be arranged in the path connecting the positive line PL and the negative line NL between the noise reducing capacitor C₁ and the smoothing capacitor C_{dc}. That is, the diode snubber capacitor is connected in parallel with the rectifier circuit 10 between the positive line PL and the negative line NL adjacent to the rectifier circuit 10. For example, the diode snubber capacitor may be a film capacitor with a relatively large capacitance.

The switch snubber capacitor is arranged in the path connecting the positive line PL and the negative line NL between the smoothing circuit 20 (the smoothing capacitor C_{dc}) and the inverter circuit 30. That is, the switch snubber capacitor is connected in parallel with the inverter circuit 30 between the positive line PL and the negative line NL adjacent to the inverter circuit 30. For example, the switch snubber capacitor may be a film capacitor with a relatively large capacitance.

The rectifier circuit 10 and the inverter circuit 30 together with other required components constitute a PIM (Power Integrated Module) 400.

The PIM 400 includes AC input terminals R, S and T, AC output terminals U, V and W, a positive electrode output terminal P0, a positive electrode input terminal P1, and a negative electrode terminal N.

The AC input terminal R, the AC input terminal S, and the AC input terminal T are externally connected to R-phase, S-phase, and T-phase input lines of the commercial AC power supply PS, respectively. Consequently, three-phase AC power input from the commercial AC power supply PS is supplied to the rectifier circuit 10.

The AC output terminal U, the AC output terminal V, and the AC output terminal W are internally connected to U-phase, V-phase and W-phase output lines of the inverter circuit respectively, and connected externally to U-phase, V-phase and W-phase input terminals of the motor M by cables, or the like. Consequently, three-phase AC power is supplied to the motor M from the power conversion device 1 (PIM 400) to drive the motor M.

A positive electrode output terminal P0 pulls out a positive line PL from an output endpoint on the positive electrode side of the rectifier circuit 10 to the outside of the PIM 400.

A positive electrode input terminal P1 pulls out a positive line PL from an input endpoint on the positive electrode side of the inverter circuit 30 to the outside of the PIM 400.

A negative electrode output terminal N pulls out a negative line NL from an output endpoint on the negative electrode side of the rectifier circuit 10 and an input endpoint on the negative electrode side of the inverter circuit 30 to the outside of the PIM 400. In other words, unlike the case of the positive line PL, in the negative line NL, the negative electrode output terminal of the rectifier circuit 10 and the negative electrode input terminal of the inverter circuit 30 are the same single terminal at the negative electrode terminal N. Consequently, the PIM 400 can be miniaturized and the mounting space can be reduced by unifying a board wiring connected to the PIM 400, compared to the case that the negative electrode input terminal and the negative electrode output terminal are provided for each of the rectifier circuit 10 and the inverter circuit 30.

The smoothing capacitor C_{dc} is included (mounted) in a capacitor board 200.

The capacitor board 200 includes a positive electrode input terminal PcO, a positive electrode output terminal Pc1, and a negative electrode terminal Nc.

The positive electrode input terminal Pc0 is connected to the positive electrode terminal of the smoothing capacitor C_{dc} on the capacitor board 200 by a wiring pattern, and is connected to the positive line PL on the output side of the rectifier circuit 10 arranged outside the capacitor board 200 (for example, on the main board). Consequently, the positive electrode terminal of the smoothing capacitor C_{dc} and the positive line PL on the output side of the rectifier circuit 10 are connected.

The positive electrode output terminal Pc1 is connected to the positive electrode terminal of the smoothing capacitor C_{dc} on the capacitor board 200 by a wiring pattern, and is connected to the positive line PL on the input side of the inverter circuit 30 arranged outside the capacitor board 200 (for example, on the main board). Consequently, the positive electrode terminal of the smoothing capacitor C_{dc} and the positive line PL on the input side of the inverter circuit 30 are connected.

The negative electrode terminal Nc is connected to the negative electrode terminal of the smoothing capacitor C_{dc} on the capacitor board 200 by a wiring pattern, and is connected to the negative line NL connected to the negative electrode terminal N of the PIM 400 arranged outside the capacitor board 200 (for example, on the main board). Consequently, the negative electrode terminal of the smoothing capacitor C_{dc} is connected to the negative line NL on the output side of the rectifier circuit 10 and the input side of the inverter circuit 30. In other words, unlike the case of the positive line PL, in the negative line NL, the negative electrode input terminal connected to the negative line NL on the output side of the rectifier circuit 10 and the negative electrode output terminal connected to the negative line NL on the input side of the inverter circuit 30 are the same single terminal at the negative electrode terminal Nc. Consequently, the mounting area of the terminals on the capacitor board 200 can be reduced, compared to the case that the negative electrode input terminal and the negative electrode output terminal are provided for each.

The positive line PL includes positive lines PL11 to PL14.

The positive line PL11 connects an output endpoint on the positive electrode side of the rectifier circuit 10 and a positive electrode output terminal P0, inside of the PIM 400.

The positive line PL12 connects the positive electrode output terminal P0 of the PIM 400 and the positive electrode input terminal Pc0 of the capacitor board 200, outside of the PIM 400 (for example, on the main board). Furthermore, a relay for preventing rush current may be arranged in the positive line PL12.

The positive line PL13 connects the positive electrode output terminal Pc1 of the capacitor board 200 and the positive electrode input terminal P1 of the PIM 400, outside of the PIM 400 (for example, on the main board).

The positive line PL14 connects an input endpoint on the positive electrode side of the inverter circuit 30 and the positive electrode input terminal P1, inside of the PIM 400.

The negative line NL includes negative lines NL11 to NL13.

The negative line NL11 connects the output endpoint of the rectifier circuit 10 and the input endpoint of the inverter circuit 30 inside of the PIM 400. In other words, unlike the case of the positive line PL, in the negative line NL, the output endpoint of the rectifier circuit 10 and the input endpoint of the inverter circuit 30 are connected inside of the PIM 400, and the negative line NL is the same single line between the output side of the rectifier circuit 10 and the input side of the inverter circuit 30.

The negative line NL12 connects the negative electrode terminal N and the negative line NL11, inside of the PIM 400, in parallel on the negative side of the rectifier circuit 10 and the inverter circuit 30. Consequently, the negative electrode terminal N is connected to the output endpoint on the negative electrode side of the rectifier circuit 10 and the input endpoint on the negative electrode side of the inverter circuit 30 via the negative line NL12 and the negative line NL11.

The negative line NL13 connects the negative electrode terminal N of the PIM 400 and the negative electrode terminal Nc of the capacitor board 200, outside of the PIM 400 on the main board.

As described above, the negative electrode output terminal of the rectifier circuit 10 and the negative electrode input terminal of the inverter circuit 30 are the same single terminal at the negative electrode terminal N. Therefore, the negative line NL between the rectifier circuit 10 and the smoothing capacitor C_{dc} and the negative line NL between the inverter circuit 30 and the smoothing capacitor C_{dc} are the same single line at the negative lines NL12, NL13 including the negative electrode terminal N and the negative electrode terminal Nc.

The noise reducing capacitor C₁ is arranged in the path connecting the positive line PL12 and the negative line NL13 outside of the PIM 400 (for example, on the main board).

The capacitance of the noise reducing capacitor C₁ may be, for example, a value greater than the junction capacitance of the diodes D₁ to D₆. Furthermore, the capacitance of the noise reducing capacitor C₁ may be, for example, a value equal to or less than the capacitance of the diode snubber capacitor which requires a relatively large capacitance to reduce the surge voltage. Hereinafter, the same may apply to the cases of the second to ninth embodiments described later.

The diode snubber capacitor may be arranged in the path connecting the positive line PL12 and the negative line NL13 between the noise reducing capacitor C₁ and smoothing capacitor C_{dc} outside of the PIM 400 (for example, on the main board).

The switch snubber capacitor, for example, may be provided in the path connecting the positive line PL13 and the negative line NL13 between the smoothing circuit 20 (smoothing capacitor C_{dc}) and the inverter circuit 30.

In the present example, the noise reducing capacitor C₁ is provided as described above.

For example, a noise component of high frequency is generated from switching operation of the semiconductor elements S₁ to S₆ of the inverter circuit 30. The noise component of high frequency from the semiconductor elements S₁ to S₆ is converted from a normal mode to a common mode, and propagated on the circuit in order of the inverter circuit 30, the smoothing capacitor C_{dc}, and the rectifier circuit 10. Then the noise component finally becomes a high frequency common mode current as a radiation noise source. In such propagation processes, generally, the noise component of high frequency is attenuated. Therefore, the amount of the noise component of high frequency is assumed to be smaller in a part of path relatively close to the rectifier circuit 10 than in a part of path relatively close to the inverter circuit 30 of the path from the inverter circuit 30 to the rectifier circuit 10 via the smoothing capacitor C_{dc}.

On the other hand, as described above, the negative line NL between the rectifier circuit 10 and the smoothing capacitor C_{dc} and the negative line NL between the inverter circuit 30 and the smoothing capacitor C_{dc} are the same single line at the negative lines NL12, NL13 including the negative electrode terminal N and the negative electrode terminal Nc. Therefore, a path between the inverter circuit 30 and the smoothing capacitor C_{dc} with a relatively large amount of noise component of high frequency and a path between the rectifier circuit 10 and the smoothing capacitor C_{dc} which is assumed to contain a relatively small amount of noise component may be arranged in proximity physically. In such a case, a noise component of high frequency may be induced by electrostatic induction or electromagnetic induction to the path between the rectifier circuit 10 and the smoothing capacitor C_{dc} from the path between the inverter circuit 30 and the smoothing capacitor C_{dc}. As a result, the amount of the noise component of high frequency of the output endpoint of the rectifier circuit 10, which is supposed to be attenuated and relatively small, would become relatively large. So, the noise component of high frequency flowing out from the rectifier circuit 10 to the commercial AC power supply PS (system side) would increase. Furthermore, the amount of the radiation noise generated by a component of 30 MHz or greater among high frequency noise components flowing out to the system side would potentially become relatively large. In particular, when the voltage of the high frequency component between the positive line PL and the negative line NL of the output endpoint of the rectifier circuit 10 is equal to or higher than the voltage of the high frequency component between the positive line PL and the negative line NL of the input endpoint of the inverter circuit 30, the amount of the radiation noise would become very large.

Note that the voltage of the high frequency component between the positive line PL and the negative line NL of the output endpoint of the rectifier circuit 10 corresponds to the voltage of the high frequency component between the positive electrode output terminal PO and the negative electrode terminal N. Furthermore, the voltage of the high frequency component between the positive line PL and the negative line NL of the input endpoint of the inverter circuit 30 corresponds to the voltage of the high frequency component between the positive electrode input terminal P1 and the negative electrode terminal N.

With respect to the above, in the present example, as described above, the noise reducing capacitor C₁ is arranged in the path connecting the positive line PL and the negative line NL between the rectifier circuit 10 and the smoothing capacitor C_{dc}. In particular, since the rectifier circuit 10 configured mainly of the diodes D₁ to D₆ does not require a drive circuit, there is a margin in the mounting space for the noise reducing capacitor C₁. This allows the noise reducing capacitor C₁ to be arranged closer to the positive electrode output terminal PO and the negative electrode terminal N corresponding to the output endpoint of the rectifier circuit 10 regardless of its size (capacitance). Therefore, the noise component of high frequency of the path between the rectifier circuit 10 and the smoothing capacitor C_{dc} can be returned to the inverter circuit 30 by being bypassed through the path including the noise reducing capacitor C₁ having a low impedance characteristic with regard to high frequency. Accordingly, even if there is a configuration or structure of a circuit in which the noise component of high frequency of the path between the rectifier circuit 10 and the smoothing capacitor C_{dc} is relatively increased due to such as an induction from other paths, the radiation noise can be reduced by reducing the noise component of high frequency flowing out to the system side.

### [Second Example of Power Conversion Device]

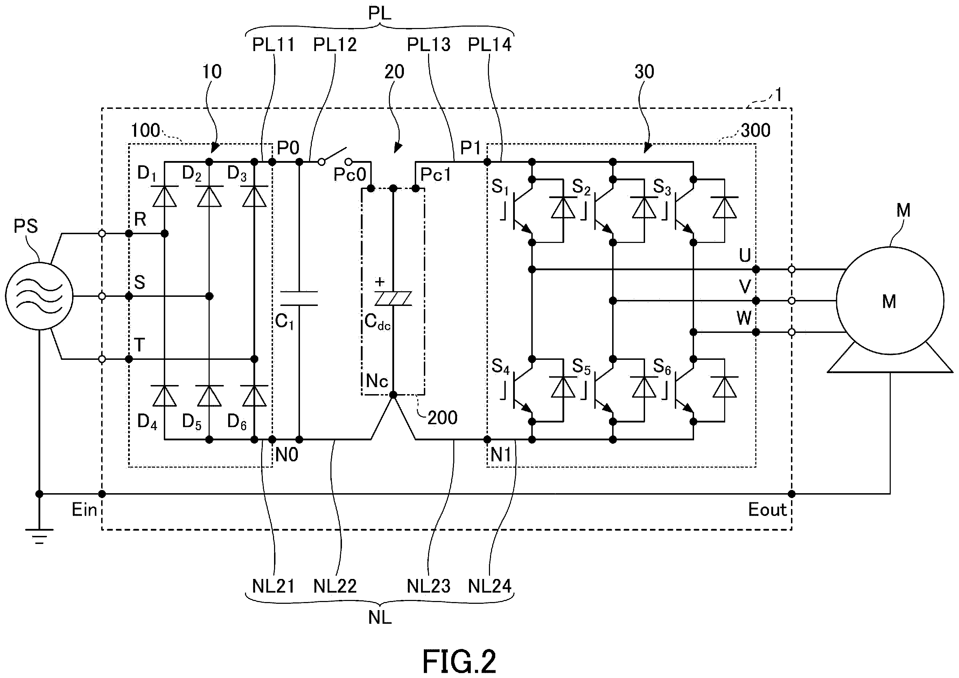

Next, a second example of the power conversion device 1 according to the present embodiment will be described with reference to FIG. 2. Hereinafter, the description will be given focusing on the part different from the previously described first example, and the description regarding the same or corresponding contents as the previously described first example may be simplified or omitted.

FIG. 2 is a circuit diagram illustrating a second example of the power conversion device 1 according to the present embodiment.

As shown in FIG. 2, the power conversion device 1 includes the rectifier circuit 10, the smoothing circuit 20, the inverter circuit 30, and the noise reducing capacitor C₁ as in the case of the first example described previously.

Unlike the case of the first example described previously, the rectifier circuit 10 and the inverter circuit 30 form separate modules (a diode module 100 and an inverter module 300) together with other required components.

The diode module 100 includes AC input terminals R, S, T, the positive electrode output terminal P0, and a negative electrode output terminal NO.

The AC input terminals R, S, T and the positive electrode output terminal P0 have the same functions as in the case of the first example described previously, except that they are provided in the diode module 100 instead of the PIM 400.

The negative electrode output terminal NO pulls out the negative line NL from the output endpoint on the negative electrode side of the rectifier circuit 10 to outside of the diode module 100.

The inverter module 300 includes AC output terminals U, V, W, the positive electrode input terminal P1, and a negative electrode input terminal N1.

The AC output terminals U, V, W, and the positive electrode input terminal P1 have the same functions as in the case of the first example described previously, except that they are provided in the inverter module 300 instead of the PIM 400.

The negative electrode input terminal N1 pulls out the negative line NL from the input endpoint on the negative electrode side of the inverter circuit 30 to the outside of the inverter module 300.

The smoothing capacitor C_{dc} is included (mounted) in the capacitor board 200 as in the case of the first example described previously.

The positive line PL includes the positive lines PL11 to PL14 as in the case of the first example described previously.

The negative line NL includes negative lines NL21 to NL24.

The negative line NL21 connects the output endpoint of the rectifier circuit 10 on the negative electrode side and the negative electrode output terminal NO of the diode module 100, inside of the diode module 100.

The negative line NL22 connects the negative electrode output terminal NO of the diode module 100 and the negative electrode terminal Nc of the capacitor board 200, outside of the diode module 100 on the main board.

The negative line NL23 connects the negative electrode terminal Nc of the capacitor board 200 and the negative electrode input terminal N1 of the inverter module 300, outside of the inverter module 300 on the main board.

The negative line NL24 connects the input endpoint on the negative electrode side of the inverter circuit 30 and the negative electrode input terminal N1 of the inverter module 300, inside of the inverter module 300.

The noise reducing capacitor C₁ is arranged in the path connecting the positive line PL12 and the negative line NL22 outside of the diode module 100 and the inverter module 300 (for example, on the main board).

The diode snubber capacitor may be arranged, for example, in the path connecting the positive line PL12 and the negative line NL22 between the noise reducing capacitor C₁ and the smoothing circuit 20 (the smoothing capacitor C_{dc}) .

The switch snubber capacitor may be provided, for example, in the path connecting the positive line PL13 and the negative line NL23 between the smoothing circuit 20 (the smoothing capacitor C_{dc}) and the inverter circuit 30.

As described above, in the present example, the noise reducing capacitor C₁ is provided as in the case of the first example described previously.

In the present example, the negative line NL between the rectifier circuit 10 and the smoothing capacitor C_{dc} and the negative line NL between the inverter circuit 30 and the smoothing capacitor C_{dc} are the same single line at the negative electrode terminal Nc. Therefore, as in the case of the first example described previously, the path between the inverter circuit 30 and the smoothing capacitor C_{dc} and the path between the rectifier circuit 10 and the smoothing capacitor C_{dc} may be arranged in proximity physically. As a result, the amount of the noise component of high frequency of the output endpoint of the rectifier circuit 10 would become relatively large, and the amount of the radiation noise generated by the component of 30 MHz or greater among the noise components of the high frequency flowing out to the system side would potentially become relatively large. In particular, when the voltage of the high frequency component between the positive line PL and the negative line NL of the output endpoint of the rectifier circuit 10 is equal to or higher than the voltage of the high frequency component between the positive line PL and the negative line NL of the input endpoint of the inverter circuit 30, the amount of the radiation noise would become very large.

Note that the voltage of the high frequency component between the positive line PL and the negative line NL of the output endpoint of the rectifier circuit 10 corresponds to the voltage of the high frequency component between the positive electrode output terminal P0 and the negative electrode output terminal NO. Furthermore, the voltage of the high frequency component between the positive line PL and the negative line NL of the input endpoint of the inverter circuit 30 corresponds to the voltage of the high frequency component between the positive electrode input terminal P1 and the negative electrode input terminal N1.

On the other hand, in the present example, as in the case of the first example described previously, the noise reducing capacitor C₁ is arranged in the path connecting the positive line PL and the negative line NL between the rectifier circuit 10 and the smoothing capacitor C_{dc}. In particular, since the rectifier circuit 10 configured mainly of the diodes D₁ to D₆ does not require a drive circuit, there is a margin in the mounting space for the noise reducing capacitor C₁. This allows the noise reducing capacitor C₁ to be arranged closer to the positive electrode output terminal P0 and the negative electrode output terminal NO corresponding to the output endpoint of the rectifier circuit 10 regardless of its size (capacitance). Therefore, the noise component of high frequency of the path between the rectifier circuit 10 and the smoothing capacitor C_{dc} can be returned to the inverter circuit 30 by being bypassed through the path including the noise reducing capacitor C₁ having a low impedance characteristic at the high frequency. Accordingly, even if there is a configuration or structure of a circuit in which the noise component of high frequency of the path between the rectifier circuit 10 and the smoothing capacitor C_{dc} is relatively increased due to such as an induction from other paths, the radiation noise can be reduced by reducing the noise component of high frequency flowing out to the system side.

### [Third Example of Power Conversion Device]

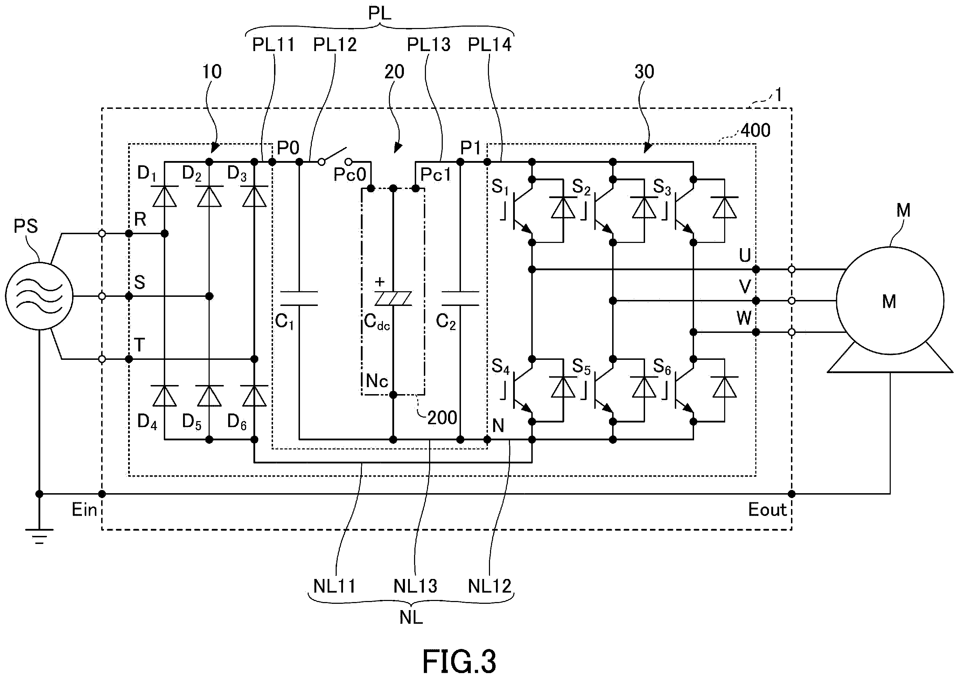

Next, a third example of the power conversion device 1 according to the present embodiment will be described with reference to FIG. 3. Hereinafter, the description will be given focusing on the part different from the previously described first example or the like, and the description regarding the same or corresponding contents as the previously described first example or the like may be simplified or omitted.

FIG. 3 is a circuit diagram illustrating a third example of the power conversion device 1 according to the present embodiment.

As shown in FIG. 3, the power conversion device 1 is different from the case of the first example described previously in that a noise reducing capacitor C₂ is added.

The noise reducing capacitor C₂ (an example of a second across-the-line capacitor) is arranged in the path connecting the positive line PL and the negative line NL between the smoothing circuit 20 (the smoothing capacitor C_{dc}) and the inverter circuit 30. Specifically, the noise reducing capacitor C₂ is arranged in the path connecting the positive line PL13 and the negative line NL13 between the smoothing capacitor C_{dc} and the inverter circuit 30.

The noise reducing capacitor C₂ may be, for example, a laminated ceramic capacitor having a relatively small capacitance like the noise reducing capacitor C₁. Furthermore, a plurality of noise reducing capacitors C₂ may be arranged, and a plurality of noise reducing capacitors C2 may be connected in parallel or in series between the positive line PL and the negative line NL. Furthermore, the capacitance of the noise reducing capacitor C₂ may be larger than, for example, the output capacitance of the semiconductor elements S₁ to S₆, that is, the capacitance between the main electrodes (for example, between collector and emitter of the IGBT) when DC voltage is applied. Furthermore, the capacitance of the noise reducing capacitor C₂ may be smaller than the capacitance of the switch snubber capacitor which requires relatively large capacitance to prevent surge voltage. Hereinafter, the same may apply to the cases of the fourth example, the sixth example, and the eighth example described later.

The switch snubber capacitor may be arranged, for example, in the path connecting the positive line PL13 and the negative line NL13 between the smoothing circuit 20 (the smoothing capacitor C_{dc}) and the noise reducing capacitor C2.

As described above, in the present example, the noise reducing capacitor C₂ is provided in addition to the noise reducing capacitor C₁.

This allows the noise component of high frequency of the path between the inverter circuit 30 and the smoothing capacitor C_{dc} to be returned to the inverter circuit 30 by being bypassed through the path including the noise reducing capacitor C₂ having a low impedance characteristic with regard to high frequency. Therefore, the noise component of high frequency in the path between the inverter circuit 30 and the smoothing capacitor C_{dc} can be reduced, and the noise component of high frequency induced to the path between the rectifier circuit 10 and the smoothing capacitor C_{dc} can be reduced. Accordingly, in addition to the operation of the noise reducing capacitor C₁, the radiation noise can be further reduced as compared with the case of the first example described previously.

### [Fourth Example of Power Conversion Device]

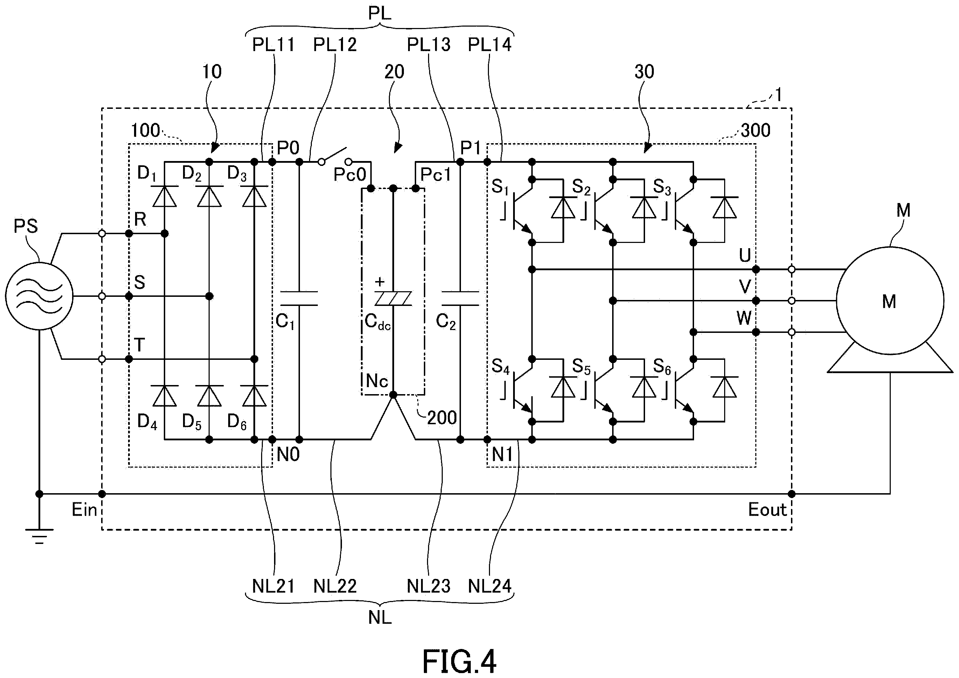

Next, a fourth example of the power conversion device 1 according to the present embodiment will be described with reference to FIG. 4. Hereinafter, the description will be given focusing on the part different from the previously described first example or the like, and the description regarding the same or corresponding contents as the previously described first example or the like may be simplified or omitted.

FIG. 4 is a circuit diagram illustrating a fourth example of the power conversion device 1 according to the present embodiment.

As shown in FIG. 4, the power conversion device 1 is different from the case of the second example described previously in that the noise reducing capacitor C₂ is added.

The noise reducing capacitor C₂, as in the case of the above third example, is arranged in the path connecting the positive line PL and the negative line NL between the smoothing circuit 20 (smoothing capacitor C_{dc}) and the inverter circuit 30. Specifically, the noise reducing capacitor C₂ is arranged in the path connecting the positive line PL13 and the negative line NL23 between the smoothing capacitor C_{dc} and the inverter circuit 30.

The switch snubber capacitor may be arranged, for example, in the path connecting the positive line PL13 and the negative line NL23 between the smoothing circuit 20 (smoothing capacitor C_{dc}) and the noise reducing capacitor C2.

As described above, in the present example, the noise reducing capacitor C₂ is provided in addition to the noise reducing capacitor C₁ as in the case of the third example described previously.

Accordingly, in addition to the operation of the noise reducing capacitor C₁, the radiation noise can be further reduced as compared with the case of the second example described previously.

### [Fifth Example of Power Conversion Device]

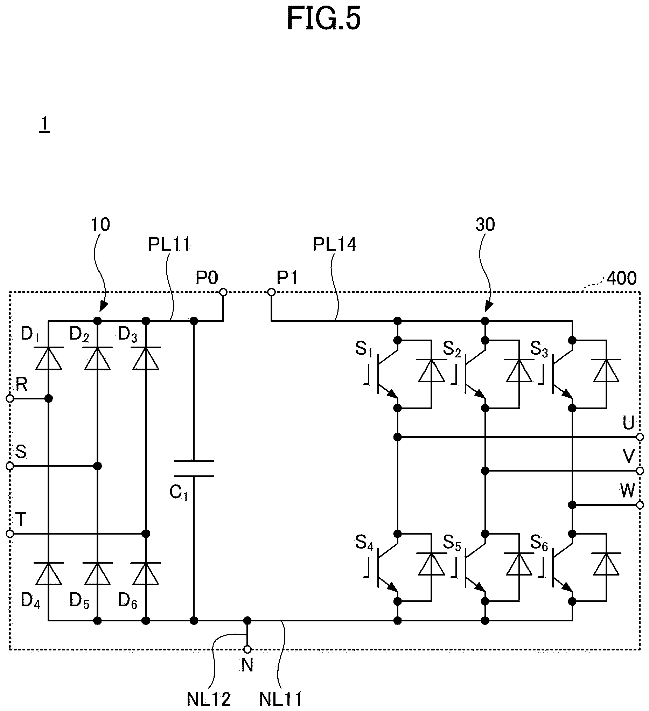

Next, a fifth example of the power conversion device 1 according to the present embodiment will be described with reference to FIG. 5. Hereinafter, the description will be given focusing on the part different from the previously described first example or the like, and the description regarding the same or corresponding contents as the previously described first example or the like may be simplified or omitted.

FIG. 5 is a circuit diagram illustrating a fifth example of the power conversion device 1 according to the present embodiment.

In the present example, the circuit configurations other than the rectifier circuit 10, the inverter circuit 30, and the noise reducing capacitor C₁ are the same as in the case of the first or third examples. Therefore, the configurations other than the rectifier circuit 10, the inverter circuit 30, and the noise reducing capacitor C₁ are omitted in FIG. 5.

As shown in FIG. 5, the power conversion device 1 is different from the case of the third example described previously in that the power conversion device 1 is arranged in the path connecting the positive line PL and the negative line NL between the rectifier circuit 10 and the smoothing circuit 20 (smoothing capacitor C_{dc}) inside of the PIM 400.

Specifically, the noise reducing capacitor C₁ is arranged in the path connecting the positive line PL11 and the negative line NL11 between the branch point of the rectifier circuit 10 and the negative line NL12. As a result, as in the case of the first example and the third example described previously, the radiation noise of the power conversion device 1 can be reduced.

As described above, in the present example, the noise reducing capacitor C₁ is arranged inside of the PIM 400.

Consequently, it is not necessary to connect the noise reducing capacitor C₁ by a wiring pattern, a busbar, or the like on the main board outside of the PIM 400. Therefore, the manufacturing efficiency of the power conversion device 1 can be improved and the power conversion device 1 can be miniaturized.

### [Sixth Example of Power Conversion Device]

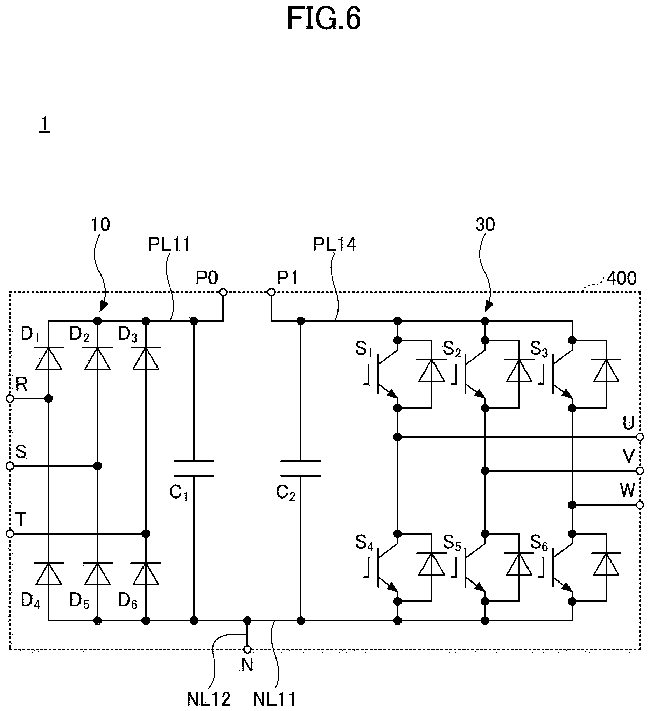

Next, a sixth example of the power conversion device 1 according to the present embodiment will be described with reference to FIG. 6. Hereinafter, the description will be given focusing on the part different from the previously described first example or the like, and the description regarding the same or corresponding contents as the previously described first example or the like may be simplified or omitted.

FIG. 6 is a circuit diagram illustrating a sixth example of the power conversion device 1 according to the present embodiment.

In the present example, the circuit configurations other than the rectifier circuit 10, the inverter circuit 30, and the noise reducing capacitor C₁ and C₂ are the same as in the case of the third example. Therefore, the configurations other than the rectifier circuit 10, the inverter circuit 30, and the noise reducing capacitor C₁ and C₂ are omitted in FIG. 6.

As shown in FIG. 6, unlike the case of the third example described previously, the noise reducing capacitor C₁ is arranged in the path connecting the positive line PL and negative line NL between the rectifier circuit 10 and the smoothing circuit 20 (the smoothing capacitor C_{dc}) inside of the PIM 400. In the same way, the noise reducing capacitor C₂ is arranged in the path connecting the positive line PL and the negative line NL between the smoothing circuit 20 (the smoothing capacitor C_{dc}) and the inverter circuit 30 inside of the PIM 400.

Specifically, the noise reducing capacitor C₁ is arranged in the path connecting the positive line PL11 and the negative line NL11 between the branch point of the rectifier circuit 10 and the negative line NL12 as in the case of the fifth example. Consequently, as in the case of the first example and the third example described previously, the radiation noise of the power conversion device 1 can be reduced.

Furthermore, the noise reducing capacitor C₂ is arranged in the path connecting the positive line PL14 and the negative line NL11 between the branch point of the inverter circuit 30 and the negative line NL12. Consequently, in addition to the operation of the noise reducing capacitor C₁, the radiation noise can be further reduced as in the case of the third example described previously.

As described above, in the present example, the noise reducing capacitors C₁ and C₂ are arranged inside of the PIM 400.

Consequently, it is not necessary to connect the noise reducing capacitors C₁ and C₂ by a wiring pattern, a busbar, or the like on the main board outside of the PIM 400. Therefore, the manufacturing efficiency of the power conversion device 1 can be improved and the power conversion device 1 can be miniaturized.

### [Seventh Example of Power Conversion Device]

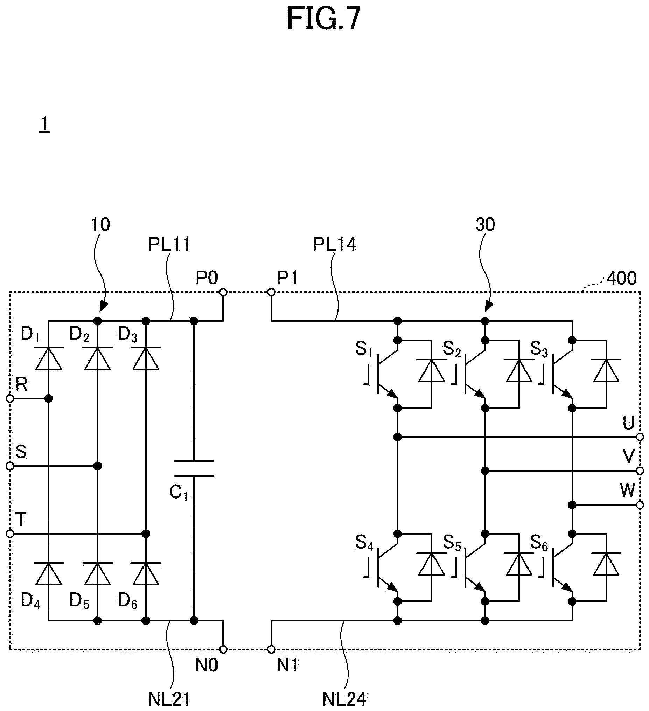

Next, a seventh example of the power conversion device 1 according to the present embodiment will be described with reference to FIG. 7. Hereinafter, the description will be given focusing on the part different from the previously described first example or the like, and the description regarding the same or corresponding contents as the previously described first example or the like may be simplified or omitted.

FIG. 7 is a circuit diagram illustrating a seventh example of the power conversion device 1 according to the present embodiment.

In the present example, as in the case of the fifth and sixth example, the rectifier circuit 10, the inverter circuit 30, and noise reducing capacitor C₁ are built in the PIM 400. The circuit configuration outside of the PIM 400 may be the same as the case of the second and fourth example except for the noise reducing capacitor C₁. Therefore, the configurations other than the rectifier circuit 10, the inverter circuit 30, and the noise reducing capacitor C₁ are omitted in FIG. 7.

As shown in FIG. 7, unlike the cases of the first and third examples described previously, the PIM 400 includes a negative electrode output terminal NO and a negative electrode input terminal N1 instead of the negative electrode terminal N.

The negative electrode output terminal NO has the same functions as in the cases of the second and fourth examples described previously, except that it is provided inside of the PIM 400 instead of the diode module 100. The negative electrode output terminal NO is connected to the negative electrode terminal Nc of the capacitor board 200 through the negative line NL22 outside of the PIM 400 on the main board as in the cases of the second and fourth examples described previously.

The negative electrode input terminal N1 has the same functions as in the cases of the second and fourth examples described previously, except that it is provided inside of the PIM 400 instead of the inverter module 300. The negative electrode input terminal N1 is connected to the negative electrode terminal Nc of the capacitor board 200 through the negative line NL23 outside of the PIM 400 on the main board.

The noise reducing capacitor C₁ is arranged inside of the PIM 400 as in the cases of the fifth and sixth examples described previously. Specifically, the noise reducing capacitor C₁ is provided in the path connecting the positive line PL11 and the negative line NL21.

While the negative electrode terminal N of the first or the third example is separated into the negative electrode output terminal NO and the negative electrode input terminal N1, the negative electrode input terminal and negative electrode output terminal of the capacitor board 200 are the same single terminal at the negative electrode terminal Nc as in the cases of the second and fourth examples. In other words, in the present example, as in the cases of the second and fourth examples, the negative line NL between the rectifier circuit 10 and the smoothing capacitor C_{dc} and the negative line NL between the inverter circuit 30 and the smoothing capacitor C_{dc} are the same single line at the negative terminal Nc. Therefore, the amount of the noise component of high frequency of the output endpoint of the rectifier circuit 10 would become relatively large, and the radiation noise generated by the component of 30 MHz or greater among the noise components of the high frequency flowing out to the system side would potentially become relatively increased.

With respect to the above, in the present example, the noise reducing capacitor C₁ is arranged inside of the PIM 400. Therefore, the radiation noise can be reduced as in the cases of the second and fourth examples described previously. Furthermore, as in the cases of the fifth and sixth examples described previously, the manufacturing efficiency of the power conversion device 1 can be improved and the power conversion device 1 can be miniaturized.

As described above, the noise reducing capacitor C₁ may be mounted inside of the PIM 400 in which the negative electrode output terminal NO and the negative electrode input terminal N1 are separately installed.

### [Eighth Example of Power Conversion Device]

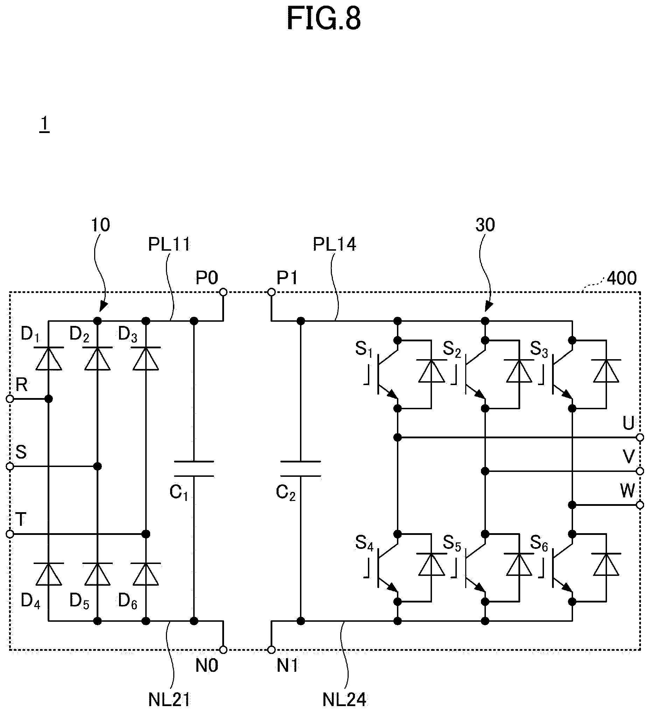

Next, an eighth example of the power conversion device 1 according to the present embodiment will be described with reference to FIG. 8. Hereinafter, the description will be given focusing on the part different from the previously described first example or the like, and the description regarding the same or corresponding contents as the previously described first example or the like may be simplified or omitted.

FIG. 8 is a circuit diagram illustrating an eighth example of the power conversion device 1 according to the present embodiment.

In the present example, the rectifier circuit 10, the inverter circuit 30, and the noise reducing capacitors C₁ and C₂ are built in the PIM 400. The circuit configuration outside of the PIM 400 may be the same as the case of the fourth example except for the noise reducing capacitors C₁ and C₂. Therefore, the configurations other than the rectifier circuit 10, the inverter circuit 30, and the noise reducing capacitors C₁ and C₂ are omitted in FIG. 8.

As shown in FIG. 8, the PIM 400 includes the negative electrode output terminal NO and the negative electrode input terminal N1 as in the case of the seventh example described previously.

The noise reducing capacitors C₁ and C₂ are arranged inside of the PIM 400 as in the case of the sixth example described previously.

Specifically, the noise reducing capacitor C₁ is provided in the path connecting the positive line PL11 and the negative line NL21.

Furthermore, the noise reducing capacitor C₂ is provided in the path connecting the positive line PL14 and the negative line NL24.

In the present example, as in the case of the seventh example, the negative line NL between the rectifier circuit 10 and the smoothing capacitor C_{dc} and the negative line NL between the inverter circuit 30 and the smoothing capacitor C_{dc} are the same single line at the negative terminal Nc. Therefore, the amount of the noise component of high frequency of the output endpoint of the rectifier circuit 10 would become relatively large, and the radiation noise generated by the component of 30 MHz or greater among the noise components of the high frequency flowing out to the system side would potentially become relatively increased.

With respect to the above, in the present example, the noise reducing capacitors C₁ and C₂ are arranged inside of the PIM 400. Therefore, the radiation noise can be further reduced as in the case of the fourth example described previously. Furthermore, as in the case of the sixth example described previously, the manufacturing efficiency of the power conversion device 1 can be improved and the power conversion device 1 can be miniaturized.

As described above, the noise reducing capacitors C₁ and C₂ may be mounted inside of the PIM 400 in which the negative electrode output terminal NO and the negative electrode input terminal N1 are separately installed.

### [Ninth Example of Power Conversion Device]

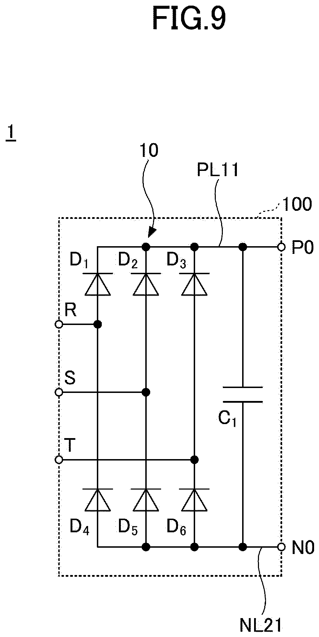

Next, a ninth example of the power conversion device 1 according to the present embodiment will be described with reference to FIG. 9. Hereinafter, the description will be given focusing on the part different from the previously described first example or the like, and the description regarding the same or corresponding contents as the previously described first example or the like may be simplified or omitted.

FIG. 9 is a circuit diagram illustrating a ninth example of the power conversion device 1 according to the present embodiment.

In the present example, the rectifier circuit 10 and the noise reducing capacitor C₁ are built in the diode module 100. The circuit configuration outside of the diode module 100 may be the same as the case of the second and fourth example except for the noise reducing capacitor C₁. Therefore, the configurations other than the rectifier circuit 10 and the noise reducing capacitor C₁ are omitted in FIG. 9.

As shown in FIG. 9, the noise reducing capacitor C₁ is arranged in the path connecting the positive line PL11 and the negative line NL21 inside of the diode module 100. Consequently, the radiation noise of the power conversion device 1 can be reduced as in the cases of the second and fourth examples described previously.

As described above, in the present example, the noise reducing capacitor C₁ is arranged inside of the diode module 100.

Consequently, it is not necessary to connect the noise reducing capacitor C₁ by a wiring pattern, a busbar, or the like on the main board outside of the diode module 100. Therefore, the manufacturing efficiency of the power conversion device 1 can be improved and the power conversion device 1 can be miniaturized.

### [Other Examples of Power Conversion Devices]

Next, other examples of the power conversion device 1 according to the present embodiment will be described.

The power conversion devices 1 of the first to ninth examples described previously may be appropriately modified or changed.

For example, in the fourth or the ninth example described previously, the noise reducing capacitor C₂ may be arranged inside of the inverter module 300. In this case, the noise reducing capacitor C₂ may be provided in the path connecting the positive line PL14 and the negative line NL24.

Consequently, it is not necessary to connect the noise reducing capacitor C₂ by a wiring pattern, a busbar, or the like on the main board outside of the inverter module 300. Therefore, the manufacturing efficiency of the power conversion device 1 can be improved and the power conversion device 1 can be miniaturized.

Furthermore, for example, in the first to ninth examples, another path with a relatively large amount of noise component of high frequency may be in proximity to the path between the rectifier circuit 10 and the smoothing capacitor C_{dc}, instead of (or in addition to) the path between the inverter circuit 30 and the smoothing capacitor C_{dc}. For example, AC output paths of the inverter circuit 30, that is, the U-phase, V-phase, and W-phase output lines may be in proximity to the path between the rectifier circuit 10 and the smoothing capacitor C_{dc}.

Consequently, even if a noise component of high frequency is induced to the path between the rectifier circuit 10 and the smoothing capacitor C_{dc} from another path, the power conversion device 1 can reduce the radiation noise by the operation of the noise reducing capacitor C1.

Furthermore, for example, in the first to ninth examples, the negative line NL between the rectifier circuit 10 and the smoothing capacitor C_{dc} and the negative line NL between the inverter circuit 30 and the smoothing capacitor C_{dc} are, in part or in entire, the same single line.

Furthermore, for example, in the first to ninth examples, at least a part of the positive line PL, instead of the negative line NL, may be the same single line between the path between the rectifier circuit 10 and the smoothing capacitor C_{dc} and the path between the inverter circuit 30 and the smoothing capacitor C_{dc}. In this case, a relay for preventing inrush current or a DC reactor may be arranged in the negative line NL.

### [Operation]

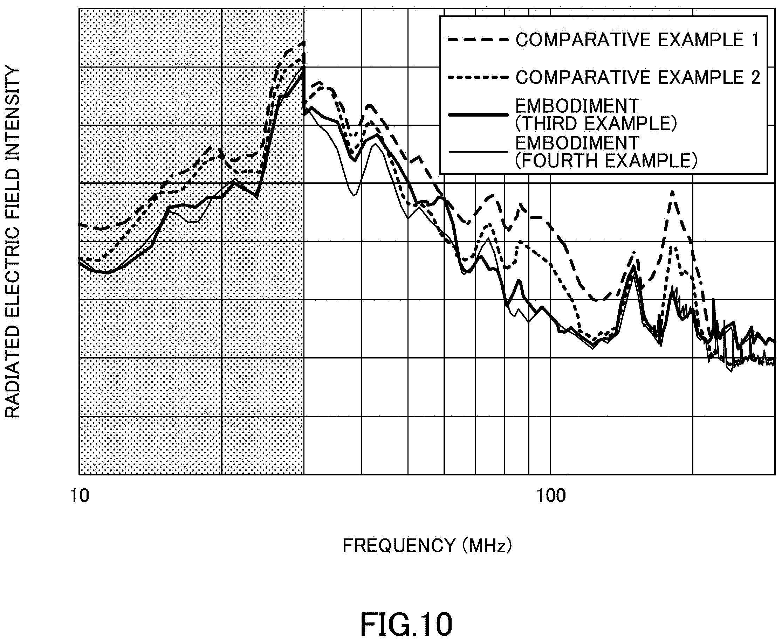

Next, the operation of the power conversion device 1 according to the present embodiment will be described with reference to FIG. 10.

FIG. 10 is a diagram illustrating spectra of radiation noise of the power conversion devices according to comparative examples and the power conversion devices 1 according to the present embodiments. Specifically, spectra of the radiated electric field intensity of the power conversion device of the first comparative example, the power conversion device of the second comparative example, the power conversion device 1 of the third example described previously, and the power conversion device 1 of the fourth example described previously are illustrated.

The power conversion device of the first comparative example has the same configuration as the power conversion device 1 of the third example except that noise reducing capacitors C₁ and C₂ are not provided. Furthermore, the power conversion device of the second comparative example has the same configuration as the power conversion device 1 of the fourth example except that noise reducing capacitors C₁ and C₂ are not provided.

As shown in FIG. 10, the radiated electric field intensity in the high frequency area of 30 MHz or greater of the power conversion device 1 of the third example is reduced to be relatively small compared to the power conversion device of the first comparative example, by operation of the noise reducing capacitors C₁ and C₂.

Similarly, the radiated electric field intensity in the high frequency area of 30 MHz or greater of the power conversion device 1 of the fourth example is reduced to be relatively small compared to the power conversion device of the second comparative example, by operation of the noise reducing capacitors C₁ and C₂.

As described above, in the present embodiment, the noise reducing capacitor C₁ is provided in the path connecting the positive line PL and the negative line NL between the rectifier circuit 10 and the smoothing capacitor C_{dc}.

Consequently, the radiation noise of the power conversion device 1 can be reduced.

Furthermore, in the present embodiment, the noise reducing capacitor C₂ may be provided in the path connecting the positive line PL and the negative line NL between the smoothing capacitor C_{dc} and the inverter circuit 30.

Consequently, the radiation noise of the power conversion device 1 can be further reduced in addition to the operation of the noise reducing capacitor C₁.

## Claims

1. A system comprising a power conversion device (1) and a main board, the power conversion device (1) comprising:
a rectifier circuit (10) that is adapted to convert AC power input from outside into DC power;
a smoothing capacitor (C_{dc}) provided in a path connecting a positive line (PL) and a negative line (NL) of DC power output from the rectifier circuit (10);
a power conversion circuit (30), connected to the positive line (PL) and the negative line (NL) in parallel with the smoothing capacitor (C_{dc}), wherein the power conversion circuit (30) is adapted to convert DC power smoothed by the smoothing capacitor (C_{dc}) into predetermined AC power by switching operation of semiconductor elements and to output the predetermined AC power; and
a first across-the-line capacitor (C₁) provided in a path connecting the positive line (PL) and the negative line (NL) between the rectifier circuit (10) and the smoothing capacitor (C_{dc}) ;
wherein the power conversion device (1) further comprises a second across-the-line capacitor (C₂) provided in a path connecting the positive line (PL) and the negative line (NL) between the smoothing capacitor (C_{dc}) and the power conversion circuit (30);
wherein the power conversion device (1) further comprises a Power Integrated Module, PIM (400), wherein the PIM (400) comprises the rectifier circuit (10), the power conversion circuit (30), the first across-the-line capacitor (C₁), and the second across-the-line capacitor (C₂);
wherein the power conversion device (1) further comprises a capacitor board (200) different from the main board, wherein the capacitor board (200) comprises the smoothing capacitor (C_{dc}) and a negative electrode terminal (Nc); and
i) wherein the PIM (400) comprises a negative electrode terminal (N) which pulls out a negative line (NL) from an output endpoint on the negative electrode side of the rectifier circuit (10) and an input endpoint on the negative electrode side of the inverter circuit (30) to an outside of the PIM (400), wherein the negative electrode terminal (Nc) of the capacitor board (200) is connected to the negative line (NL) connected to the negative electrode terminal (N) of the PIM (400) arranged outside the capacitor board (200); wherein the negative line (NL) comprises a first negative line (NL11), a second negative line (NL12), and a third negative line (NL13);
wherein the first negative line (NL11) is configured to connect the output endpoint of the rectifier circuit (10) and the input endpoint of the inverter circuit (30) inside of the PIM (400);
wherein the second negative line (NL12) is configured to connect the negative electrode terminal (N) and the first negative line (NL11) inside of the PIM (400); and
wherein the third negative line (NL13) is configured to connect the negative electrode terminal (N) of the PIM (400) and the negative electrode terminal (Nc) of the capacitor board (200) outside of the PIM (400) on the main board, or
ii) wherein the PIM (400) comprises a negative electrode output terminal (N0) which pulls out a negative line (NL) from an output endpoint on the negative electrode side of the rectifier circuit (10) to an outside of the PIM (400) and a negative electrode input terminal (N1) which pulls out the negative line (NL) from an input endpoint on the negative electrode side of the inverter circuit (30) to the outside of the PIM (400); wherein the negative line (NL) comprises a first negative line (NL21), a second negative line (NL22), a third negative line (NL23), and a fourth negative line (NL24);
wherein the first negative line (NL21) is configured to connect the output endpoint of the rectifier circuit (10) and the negative electrode output terminal (N0) of the PIM (400) inside of the PIM (400); wherein the second negative line (NL22)
is configured to connect the negative electrode output terminal (N0) to the negative electrode terminal (Nc) of the capacitor board (200) outside of the PIM (400) on the main board;
wherein the third negative line (NL23) is configured to connect the negative electrode input terminal (N1) to the negative electrode terminal (NC) of the capacitor board (200) outside of the PIM (400) on the main board; and
wherein the fourth negative line (NL24)
is configured to connect the input endpoint of the inverter circuit (30) and the negative electrode input terminal (N1) of the PIM (400) inside of the PIM (400).

2. The system as claimed in claim 1, wherein a voltage between the positive line (PL) and the negative line (NL) at output endpoints of the rectifier circuit (10) is at the same level as a voltage between the positive line (PL) and the negative line (NL) at input endpoints of the power conversion circuit (30), or is higher than the voltage between the positive line (PL) and the negative line (NL) at the input endpoints of the power conversion circuit (30).

3. The system as claimed in claim 1 or 2, wherein the negative line (NL) between the rectifier circuit (10) and the smoothing capacitor (C_{dc}) and the negative line (NL) between the power conversion circuit (30) and the smoothing capacitor (C_{dc}), or the positive line (PL) between the rectifier circuit (10) and the smoothing capacitor (C_{dc}) and the positive line (PL) between the power conversion circuit (30) and the smoothing capacitor (C_{dc}), are at least partially the same line.

4. The system as claimed in any one of claims 1 to 3, wherein the first across-the-line capacitor (C₁) has a capacitance greater than a junction capacitance of a diode included in the rectifier circuit (10).

5. The system as claimed in any one of claims 1 to 4, wherein the first across-the-line capacitor (C₁) is a laminated ceramic capacitor.

6. The system as claimed in any one of claims 1 to 5, wherein a plurality of said first across-the-line capacitors (C₁) is provided, and each of the plurality of the first across-the-line capacitors (C₁) is connected in series or in parallel between the positive line (PL) and the negative line (NL).

7. The system as claimed in any one of claims 1 to 6, comprising a second across-the-line capacitor (C₂) provided in a path connecting the positive line (PL) and the negative line (NL) between the smoothing capacitor (C_{dc}) and the power conversion circuit (30), wherein the second across-the-line capacitor (C₂) has a capacitance greater than a capacitance between main electrodes of each of the semiconductor elements when a DC voltage is applied to the semiconductor elements.

8. The system as claimed in claim 7, wherein the second across-the-line capacitor (C₂) is a laminated ceramic capacitor.

9. The system as claimed in any one of claims 7 or 8, wherein a plurality of said second across-the-line capacitors (C₂) is provided, and each of the plurality of the second across-the-line capacitors (C₂) is connected in series or in parallel between the positive line (PL) and the negative line (NL).

## Patentansprüche

1. System, umfassend eine Stromumwandlungsvorrichtung (1) und eine Hauptplatine, wobei die Stromumwandlungsvorrichtung (1) umfasst:
eine Gleichrichterschaltung (10), die angepasst ist, dass sie von außen zugeführten Wechselstrom in Gleichstrom umwandelt;
einen Glättungskondensator (C_{dc}), der in einem Pfad vorgesehen ist, der eine positive Leitung (PL) und eine negative Leitung (NL) des Gleichstromausgangs von der Gleichrichterschaltung (10) verbindet;
eine Stromumwandlungsschaltung (30), die parallel zu dem Glättungskondensator (C_{dc}) mit der positiven Leitung (PL) und der negativen Leitung (NL) verbunden ist, wobei die Stromumwandlungsschaltung (30) angepasst ist, durch den Glättungskondensator (C_{dc}) geglättete Gleichspannung durch Schaltbetrieb von Halbleiterelementen in einen vorbestimmten Wechselstrom umzuwandeln und den vorbestimmten Wechselstrom auszugeben; und
einen ersten Querkondensator (C₁), der in einem Pfad vorgesehen ist, der die positive Leitung (PL) und die negative Leitung (NL) zwischen der Gleichrichterschaltung (10) und dem Glättungskondensator (C_{dc}) verbindet;
wobei die Stromumwandlungsvorrichtung (1) ferner einen zweiten Querkondensator (C₂) umfasst, der in einem Pfad vorgesehen ist, der die positive Leitung (PL) und die negative Leitung (NL) zwischen dem Glättungskondensator (C_{dc}) und der Stromumwandlungsschaltung (30) verbindet;
wobei die Stromumwandlungsvorrichtung (1) ferner ein Power Integrated Module PIM (400) umfasst, wobei das PIM (400) die Gleichrichterschaltung (10), die Stromumwandlungsschaltung (30), den ersten Querkondensator (C₁) und den zweiten Querkondensator (C₂) umfasst;
wobei die Stromumwandlungsvorrichtung (1) ferner eine von der Hauptplatine verschiedene Kondensatorplatine (200) umfasst, wobei die Kondensatorplatine (200) den Glättungskondensator (C_{dc}) und einen Negativelektrodenanschluss (Nc) umfasst; und
i) wobei das PIM (400) einen Negativelektrodenanschluss (N) umfasst, der eine negative Leitung (NL) von einem Ausgangsendpunkt auf der Negativelektrodenseite der Gleichrichterschaltung (10) und einem Eingangsendpunkt auf der Negativelektrodenseite der Wechselrichterschaltung (30) zu einer Außenseite des PIM (400) herausführt, wobei der Negativelektrodenanschluss (Nc) der Kondensatorplatine (200) mit der negativen Leitung (NL) verbunden ist, die mit dem Negativelektrodenanschluss (N) des PIM (400) verbunden ist, das außerhalb der Kondensatorplatine (200) angeordnet ist;
wobei die negative Leitung (NL) eine erste negative Leitung (NL11), eine zweite negative Leitung (NL12) und eine dritte negative Leitung (NL13) umfasst;
wobei die erste negative Leitung (NL11) konfiguriert ist, den Ausgangsendpunkt der Gleichrichterschaltung (10) und den Eingangsendpunkt der Wechselrichterschaltung (30) innerhalb des PIM (400) zu verbinden;
wobei die zweite negative Leitung (NL12) konfiguriert ist, den Negativelektrodenanschluss (N) und die erste negative Leitung (NL11) innerhalb des PIM (400) zu verbinden; und
wobei die dritte negative Leitung (NL13) konfiguriert ist, den Negativelektrodenanschluss (N) des PIM (400) und den Negativelektrodenanschluss (Nc) der Kondensatorplatine (200) außerhalb des PIM (400) auf der Hauptplatine zu verbinden, oder
ii) wobei das PIM (400) einen Negativelektrodenausgangsanschluss (N0), der eine negative Leitung (NL) von einem Ausgangsendpunkt auf der Negativelektrodenseite der Gleichrichterschaltung (10) zu einer Außenseite des PIM (400) herausführt, und einen Negativelektrodeneingangsanschluss (N1), der die negative Leitung (NL) von einem Eingangsendpunkt auf der Negativelektrodenseite der Wechselrichterschaltung (30) zur Außenseite des PIM (400) herausführt, umfasst;
wobei die negative Leitung (NL) eine erste negative Leitung (NL21), eine zweite negative Leitung (NL22), eine dritte negative Leitung (NL23) und eine vierte negative Leitung (NL24) umfasst;
wobei die erste negative Leitung (NL21) konfiguriert ist, den Ausgangsendpunkt der Gleichrichterschaltung (10) und den Negativelektrodenausgangsanschluss (N0) des PIM (400) innerhalb des PIM (400) zu verbinden;
wobei die zweite negative Leitung (NL22) konfiguriert ist, den Negativelektrodenausgangsanschluss (N0) mit dem Negativelektrodenanschluss (Nc) der Kondensatorplatine (200) außerhalb des PIM (400) auf der Hauptplatine zu verbinden;
wobei die dritte negative Leitung (NL23) konfiguriert ist, den Negativelektrodeneingangsanschluss (N1) mit dem Negativelektrodenanschluss (NC) der Kondensatorplatine (200) außerhalb des PIM (400) auf der Hauptplatine zu verbinden; und
wobei die vierte negative Leitung (NL24) konfiguriert ist, den Eingangsendpunkt der Wechselrichterschaltung (30) und den Negativelektrodeneingangsanschluss (N1) des PIM (400) innerhalb des PIM (400) zu verbinden.

2. System nach Anspruch 1, wobei sich eine Spannung zwischen der positiven Leitung (PL) und der negativen Leitung (NL) an Ausgangsendpunkten der Gleichrichterschaltung (10) auf dem gleichen Niveau befindet wie eine Spannung zwischen der positiven Leitung (PL) und der negativen Leitung (NL) an Eingangsendpunkten der Stromumwandlungsschaltung (30) oder höher ist als die Spannung zwischen der positiven Leitung (PL) und der negativen Leitung (NL) an den Eingangsendpunkten der Stromumwandlungsschaltung (30).

3. System nach Anspruch 1 oder 2, wobei die negative Leitung (NL) zwischen der Gleichrichterschaltung (10) und dem Glättungskondensator (C_{dc}) und die negative Leitung (NL) zwischen der Stromumwandlungsschaltung (30) und dem Glättungskondensator (C_{dc}) oder die positive Leitung (PL) zwischen der Gleichrichterschaltung (10) und dem Glättungskondensator (C_{dc}) und die positive Leitung (PL) zwischen der Stromumwandlungsschaltung (30) und dem Glättungskondensator (C_{dc}) mindestens teilweise die gleiche Leitung sind.

4. System nach einem der Ansprüche 1 bis 3, wobei der erste Querkondensator (C₁) eine Kapazität aufweist, die größer ist als eine Sperrschichtkapazität einer in der Gleichrichterschaltung (10) enthaltenen Diode.

5. System nach einem der Ansprüche 1 bis 4, wobei der erste Querkondensator (C₁) ein laminierter Keramikkondensator ist.

6. System nach einem der Ansprüche 1 bis 5, wobei mehrere der ersten Querkondensatoren (C₁) vorgesehen sind und jeder der mehreren ersten Querkondensatoren (C₁) zwischen der positiven Leitung (PL) und der negativen Leitung (NL) in Reihe oder parallel verbunden ist.

7. System nach einem der Ansprüche 1 bis 6, umfassend einen zweiten Querkondensator (C₂), der in einem Pfad vorgesehen ist, der die positive Leitung (PL) und die negative Leitung (NL) zwischen dem Glättungskondensator (C_{dc}) und der Stromumwandlungsschaltung (30) verbindet, wobei der zweite Querkondensator (C₂) eine Kapazität aufweist, die größer ist als eine Kapazität zwischen Hauptelektroden von jedem der Halbleiterelemente, wenn eine Gleichspannung an die Halbleiterelemente angelegt wird.

8. System nach Anspruch 7, wobei der zweite Querkondensator (C₂) ein laminierter Keramikkondensator ist.

9. System nach einem der Ansprüche 7 oder 8, wobei mehrere der zweiten Querkondensatoren (C₂) vorgesehen sind und jeder der mehreren zweiten Querkondensatoren (C₂) zwischen der positiven Leitung (PL) und der negativen Leitung (NL) in Reihe oder parallel verbunden ist.

## Revendications

1. Système comprenant un dispositif de conversion d'alimentation électrique (1) et une carte principale, le dispositif de conversion d'alimentation électrique (1) comprenant :
un circuit redresseur (10) qui est apte à convertir une alimentation en courant alternatif appliquée en entrée depuis l'extérieur en une alimentation en courant continu ;
un condensateur de lissage (C_{dc}) fourni sur un trajet connectant une ligne positive (PL) et une ligne négative (NL) de l'alimentation en courant continu fournie en sortie à partir du circuit redresseur (10) ;
un circuit de conversion d'alimentation électrique (30), connecté à la ligne positive (PL) et à la ligne négative (NL) en parallèle avec le condensateur de lissage (C_{dc}), dans lequel le circuit de conversion d'alimentation électrique (30) est apte à convertir l'alimentation en courant continu, lissée par le condensateur de lissage (C_{dc}), en une alimentation en courant alternatif prédéterminée, par le biais d'une opération de commutation d'éléments semi-conducteurs, et à fournir en sortie l'alimentation en courant alternatif prédéterminée ; et
un premier condensateur antiparasite (C₁) fourni sur un trajet connectant la ligne positive (PL) et la ligne négative (NL) entre le circuit redresseur (10) et le condensateur de lissage (C_{dc}) ;
dans lequel le dispositif de conversion d'alimentation électrique (1) comprend en outre un deuxième condensateur antiparasite (C₂) fourni sur un trajet connectant la ligne positive (PL) et la ligne négative (NL) entre le condensateur de lissage (C_{dc}) et le circuit de conversion d'alimentation électrique (30) ;
dans lequel le dispositif de conversion d'alimentation électrique (1) comprend en outre un module intégré de puissance, PIM, (400), dans lequel le module PIM (400) comprend le circuit redresseur (10), le circuit de conversion d'alimentation électrique (30), le premier condensateur antiparasite (Ci) et le deuxième condensateur antiparasite (C₂) ;
dans lequel le dispositif de conversion d'alimentation électrique (1) comprend en outre une carte de condensateur (200) différente de la carte principale, dans laquelle la carte de condensateur (200) comprend le condensateur de lissage (C_{dc}) et une borne d'électrode négative (Nc) ; et
i) dans lequel le module PIM (400) comprend une borne d'électrode négative (N) qui tire une ligne négative (NL) depuis un point d'extrémité de sortie sur le côté d'électrode négative du circuit redresseur (10) et un point d'extrémité d'entrée sur le côté d'électrode négative du circuit onduleur (30) vers l'extérieur du module PIM (400), dans laquelle la borne d'électrode négative (Nc) de la carte de condensateur (200) est connectée à la ligne négative (NL) connectée à la borne d'électrode négative (N) du module PIM (400) agencée à l'extérieur de la carte de condensateur (200) ;
dans laquelle la ligne négative (NL) comprend une première ligne négative (NL11), une deuxième ligne négative (NL12) et une troisième ligne négative (NL13) ;
dans laquelle la première ligne négative (NL11) est configurée de manière à connecter le point d'extrémité de sortie du circuit redresseur (10) et le point d'extrémité d'entrée du circuit onduleur (30) à l'intérieur du module PIM (400) ;
dans laquelle la deuxième ligne négative (NL12) est configurée de manière à connecter la borne d'électrode négative (N) et la première ligne négative (NL11) à l'intérieur du module PIM (400) ; et
dans laquelle la troisième ligne négative (NL13) est configurée de manière à connecter la borne d'électrode négative (N) du module PIM (400) et la borne d'électrode négative (Nc) de la carte de condensateur (200) à l'extérieur du module PIM (400) sur la carte principale ; ou
ii) dans lequel le module PIM (400) comprend une borne de sortie d'électrode négative (N0) qui tire une ligne négative (NL) depuis un point d'extrémité de sortie sur le côté d'électrode négative du circuit redresseur (10) vers l'extérieur du module PIM (400) et une borne d'entrée d'électrode négative (N1) qui tire la ligne négative (NL) depuis un point d'extrémité d'entrée sur le côté d'électrode négative du circuit onduleur (30) vers l'extérieur du module PIM (400) ;
dans laquelle la ligne négative (NL) comprend une première ligne négative (NL21), une deuxième ligne négative (NL22), une troisième ligne négative (NL23) et une quatrième ligne négative (NL24) ;
dans laquelle la première ligne négative (NL21) est configurée de manière à connecter le point d'extrémité de sortie du circuit redresseur (10) et la borne de sortie d'électrode négative (N0) du module PIM (400) à l'intérieur du module PIM (400) ;
dans laquelle la deuxième ligne négative (NL22) est configurée de manière à connecter la borne de sortie d'électrode négative (N0) à la borne d'électrode négative (Nc) de la carte de condensateur (200) à l'extérieur du module PIM (400) sur la carte principale ;
dans laquelle la troisième ligne négative (NL23) est configurée de manière à connecter la borne d'entrée d'électrode négative (N1) à la borne d'électrode négative (NC) de la carte de condensateur (200) à l'extérieur du module PIM (400) sur la carte principale ; et
dans laquelle la quatrième ligne négative (NL24) est configurée de manière à connecter le point d'extrémité d'entrée du circuit onduleur (30) et la borne d'entrée d'électrode négative (N1) du module PIM (400) à l'intérieur du module PIM (400).

2. Système selon la revendication 1, dans lequel une tension entre la ligne positive (PL) et la ligne négative (NL) aux extrémités de sortie du circuit redresseur (10) est au même niveau qu'une tension entre la ligne positive (PL) et la ligne négative (NL) aux extrémités d'entrée du circuit de conversion d'alimentation électrique (30), ou est supérieure à la tension entre la ligne positive (PL) et la ligne négative (NL) aux extrémités d'entrée du circuit de conversion d'alimentation électrique (30).

3. Système selon la revendication 1 ou 2, dans lequel la ligne négative (NL) entre le circuit redresseur (10) et le condensateur de lissage (C_{dc}) et la ligne négative (NL) entre le circuit de conversion d'alimentation électrique (30) et le condensateur de lissage (C_{dc}), ou la ligne positive (PL) entre le circuit redresseur (10) et le condensateur de lissage (C_{dc}) et la ligne positive (PL) entre le circuit de conversion d'alimentation électrique (30) et le condensateur de lissage (C_{dc}), sont au moins partiellement la même ligne.

4. Système selon l'une quelconque des revendications 1 à 3, dans lequel le premier condensateur antiparasite (C₁) présente une capacité supérieure à une capacité de jonction d'une diode incluse dans le circuit redresseur (10).

5. Système selon l'une quelconque des revendications 1 à 4, dans lequel le premier condensateur antiparasite (C₁) est un condensateur céramique stratifié.

6. Système selon l'une quelconque des revendications 1 à 5, dans lequel une pluralité desdits premiers condensateurs antiparasites (C₁) est fournie, et chaque condensateur de la pluralité des premiers condensateurs antiparasites (C₁) est connecté en série ou en parallèle entre la ligne positive (PL) et la ligne négative (NL).

7. Système selon l'une quelconque des revendications 1 à 6, comprenant un deuxième condensateur antiparasite (C₂) fourni sur un trajet connectant la ligne positive (PL) et la ligne négative (NL) entre le condensateur de lissage (C_{dc}) et le circuit de conversion d'alimentation électrique (30), dans lequel le deuxième condensateur antiparasite (C₂) présente une capacité supérieure à une capacité entre des électrodes principales de chacun des éléments semi-conducteurs lorsqu'une tension continue est appliquée aux éléments semi-conducteurs.

8. Système selon la revendication 7, dans lequel le deuxième condensateur antiparasite (C₂) est un condensateur céramique stratifié.

9. Système selon l'une quelconque des revendications 7 et 8, dans lequel une pluralité desdits deuxièmes condensateurs antiparasites (C₂) est fournie, et chaque condensateur de la pluralité des deuxièmes condensateurs antiparasites (C₂) est connecté en série ou en parallèle entre la ligne positive (PL) et la ligne négative (NL).
